# EUROPÄISCHE PATENTSCHRIFT

(11) **EP 0 557 265 B1**
(45) Veröffentlichungstag und Bekanntmachung des Hinweises auf die Patenterteilung: **04.09.1996**
(21) Anmeldenummer: 93890016.4
(22) Anmeldetag: 12.02.1993
(51) Int. Cl.: G01D 5/249, G01D 5/34

(54) **Drehgeber**
Shaft encoder
Capteur de rotation

(30) Priorität: 20.02.1992 AT 307/92
(43) Veröffentlichungstag der Anmeldung: 25.08.1993
(73) Patentinhaber: RSF-Elektronik Gesellschaft m.b.H., A-5121 Tarsdorf 93 (AT)
(72) Erfinder: Rieder, Heinz, A-5110 Oberndorf (AT); Schwaiger, Max, A-5121 Ostermiething (AT)
(74) Vertreter: Hübscher, Heiner, Dipl.-Ing.

(56) Entgegenhaltungen:
- EP-A- 0 449 037
- DE-A- 3 909 767
- US-A- 4 945 231
- US-A- 5 068 529
- MACHINE DESIGN Bd. 57, Nr. 20, 12. September 1985, CLEVELAND,OHIO,USA Seiten 89 - 90 MONTGOMERY 'OPTICAL SHAFT ENCODERS'

## Beschreibung

Die Erfindung betrifft einen Drehgeber nach dem Oberbegriff des Patentanspruches 1.

Drehgeber werden sowohl für die Erfassung von Winkelpositionen drehender oder schwenkender Teile als auch für Bahnmessungen verwendet, wobei im letzteren Fall die einer Bahn folgende, z.B. lineare Bewegung eines Meßfühlers über eine Umwandlereinrichtung in eine Drehbewegung zum Antrieb der Welle des Drehgebers umgesetzt wird.

Ein Drehgeber der eingangs genannten Art ist aus der US-A 5 068 529 bekannt. Bei diesem bekannten Drehgeber ist die Absolutteilung vorzugsweise in mehreren Spuren in Form ungleichmäßig verteilter Felder vorhanden, wobei eigene Ableseeinrichtungen für jede Spur vorgesehen werden. Die Flanken der Absolutteilung fluchten hier nicht mit den Inkrementen der Inkrementalteilung. Die Messung erfolgt in der Weise, daß beim Nulldurchgang des Abtastsignales der Inkrementalteilung jeweils ein an der Ableseeinheit für die Absolutteilung anstehendes Codewort ausgelesen und damit die Absolutposition bei jedem Nulldurchgang des Inkrementalsignales neu aus der Ablesung der Absolutteilung ermittelt wird. Dies bedingt eine bestimmte Ablesezeit und es ergibt sich daher insgesamt gesehen nur eine relativ geringe, mögliche Meßgeschwindigkeit. Die erzielbare Auflösung ist relativ gering, weil immer nur die absoluten Meßwerte erfaßt und ausgewertet werden können. Es werden entsprechend ausgeführte Meßsysteme und Steuerungen notwendig, so daß ein Einsatz des Drehgebers für Meßsysteme und Steuerungen, die auf die Auswertung inkrementaler Zählsignale abgestimmt sind, unmöglich wird und auch eine Nachrüstung solcher Systeme mit dem Drehgeber ausscheidet.

Neben Drehgebern der eingangs genannten Art sind auch Drehgeber bekannt, bei denen auch die Geberscheibe ausschließlich mit einer Absolutcodierung versehen ist. Ein Beispiel für einen derartigen Drehgeber entnimmt man "Machine Design", Bd. 57, Nr. 20, 12-9-1985, Seiten 89-90. Dabei ist die Geberscheibe bevorzugt im sogenannten Gray-Code codiert. Zur Erfassung der Anzahl der Umdrehungen kann mit der Antriebswelle der Geberscheibe eine weitere Zählerscheibe über ein untersetzendes Zwischengetriebe gekuppelt werden, für welche zusätzliche Scheibe eine weitere Ableseeinrichtung vorzusehen ist.

Der grundsätzliche Vorteil der Drehgeber mit absolut codierten Geberscheiben besteht allerdings darin, daß die Momentanposition auch bei stillstehendem Drehgeber erfaßt werden kann und nicht, wie bei Drehgebern mit Inkrementalteilung und Referenzmarken zur Erfassung der Momentanposition nach Betriebsunterbrechungen das Anfahren wenigstens einer Referenzmarke und nachherige Rückstellung auf die Ausgangsposition notwendig wird, was vor allem bei Maschinensteuerungen oder bei Robotern zu Schwierigkeiten bzw. sogar zu Beschädigungen der mit dem Drehgeber bewegten Teile führen kann.

Aus der CH-A 669 457 ist ein kombiniertes Inkremental-Absolutmeßsystem für Längenmessungen bekannt, bei dem für die Ablesung der Meßteilung ein Dioden-Zeilenarray verwendet wird, das den beleuchteten Maßstab über eine Vergrößerungsoptik mit genau definiertem Vergrößerungsfaktor abtastet, wobei die Pixel des Arrays entsprechend der Hell-Dunkelverteilung des eine Strichteilung aufweisenden Maßstabes unterschiedliche Ladungen erhalten. Zusätzlich zu der Erzeugung inkrementeller Zählsignale besteht auch die Möglichkeit einer Absolutmessung, wenn man durch Vertauschung von Hell- und Dunkelfeldern des Maßstabes diesen Maßstab zusätzlich in quasi-zufälliger Form codiert, so daß einzelne Maßstababschnitte durch verschiedene, sich aus der Codierung ergebende Codewörter definiert sind. In der Praxis zeigt dieses Längenmeßsystem aber im Absolutbereich ein zu wenig genaues Auflösungsvermögen und eine exakte Zuordnung der Absolutmessung auf die Inkrementalmessung stößt auf Schwierigkeiten. Für die Absolutmessung ist es notwendig, die Ladungszustände benachbarter Pixel des Arrays zu vergleichen und eine Differenzierung zwischen Absolut-Codierungssignalen und den für die Inkrementalmessung erforderlichen Signalen vorzunehmen. Wegen der Verwendung einer Optik führen überdies schon geringste Änderungen des Abstandes der Ableseeinheit von der Meßteilung und geringste Teilungsfehler des Maßstabes zu Meßfehlern. Zu berücksichtigen ist ferner, daß eine Auswertung der aus absoluten Codierung erhaltenen Signale zu Positionssignalen wesentlich länger dauert, als die Erzeugung und Auswertung einfacher Zählsignale aus der inkrementellen Abtastung der Meßsignale.

Aufgabe der Erfindung ist die Schaffung eines Drehgebers der eingangs genannten Art, der bei einfachem Aufbau ein hohes Auflösungsvermögen hat und bei dem die Absolutlage der Geberscheibe auch bei Betriebsbeginn und nach Betriebsunterbrechungen bzw. Stromausfall eindentig definiert ist.

Die gestellte Aufgabe wird durch die Merkmale des Patentanspruches 1 gelöst.

Das Auflösungsvermögen des auf diese Weise realisierten Meßsystems liegt in der gleichen Größenordnung wie das Auflösungsvermögen eines rein inkrementellen Meßsystems, ist also vielfach höher als jenes bekannter absolut codierter Geberscheiben. Bei einer praktisch verwirklichten Ausführungsform läßt sich durch Abtastung des Strichcodes mit dem Zeilendetektor ein Auflösungsvermögen in der Größenordnung von z.B. 20 µ erzielen, wobei durch Erfassung der Phasenlage der aus der Abtastung der Inkrementalteilung erhaltenen Signale innerhalb der durch das erfaßte Codewort absolut definierten Position ein wenigstens zehnmal größeres Auflösungsvermögen erreichbar ist, so daß jede Einzelposition und insbesondere jede Startposition mit hinreichender Genauigkeit definiert werden kann. Bei der seriellen Codierung kann sowohl mit ineinander verschachtelten Codewörtern als auch mit aufeinanderfolgenden Codewörtern mit zugeordnetem Start-Bit gearbeitet werden. Bei der verschachtelten seriellen Codierung ergibt sich als Anzahl der möglichen Codewörter aus Strich und Lücke der theoretische Wert von 2ⁿ, wobei n die Anzahl der Pixel des Zeilendetektors ist. Bei einer Codierung mit Startbit wird jeweils die Relativlage des erfaßten Startbits zum Zeilendetektor erfaßt, so daß die Lage des Codeworts zum Zeilendetektor die momentane Absolutposition definiert. Die Startposition wird durch die Blitzlichtaufnahme eindeutig auf einfache Weise definiert. Für die weitere Messung reicht die Auswertung der aus der Abtastung der Inkrementalteilung erhaltenen Signale völlig aus, wobei sich im Verlaufe eines Meßvorganges aus diesen Signalen auch die Anzahl der zurückgelegten Umdrehungen bestimmen läßt. Wegen der nur kurzzeitigen Benützung können als Beleuchtungseinrichtungen relativ kurzlebigere Einrichtungen, z.B. Laserdioden, eingesetzt werden, die bei der Abtastung der seriell codierten Meßteilung wegen des monochromatischen Lichtes zu bevorzugen sind. Ferner können die Signale des Drehgebers problemlos bei Steuerungen verwendet werden, die an sich auf Inkrementalsignale abgestimmt sind, wobei wegen der rein inkrementellen Messung bei der Bewegung auch hohe Drehzahlen des Drehgebers zulässig werden.

Für die Erfassung der Anzahl der zurückgelegten Umdrehungen der Geberscheibe sind verschiedene Varianten möglich, wobei aber jeweils die Bedingung eingehalten wird, daß auch Umdrehungen der Geberscheibe erfaßt werden müssen, während keine äußere Energieversorgung für die Zähleinrichtung vorhanden ist.

Eine dieser Möglichkeiten ist im Anspruch 2 angegeben.

Wegen des vielfach höheren Auflösungsvermögens bei der erfindungsgemäß vorgesehenen seriellen Strichcodierung wird man meist mit einer einzigen zusätzlichen Geberscheibe bei entsprechend hoch untersetzendem Zwischengetriebe das Auslangen finden. Zur Erhöhung der Ablesegenauigkeit kann auch die zusätzliche Geberscheibe mit einer Inkrementalteilung und zugeordneten Ableseeinrichtungen versehen sein. Um bei einer Drehung der ersten Geberscheibe eine merkbare Drehung der zweiten Geberscheibe zu erzielen, ist es auch möglich, anstelle eines angestrebten Übersetzungsverhältnisses von z.B. 4096 : 1 statt dem Wert "1" eine höhere relative Primzahl zu 4096, z.B. 27 zu wählen, so daß die erste und die zweite Geberscheibe nach 4096 Umdrehungen der ersten Geberscheibe und 27 Umdrehungen der zweiten Geberscheibe wieder absolut gleiche Positionen erreichen.

Nach einer Variante gemäß Anspruch 3 wird die Gesamtanordnung weiter vereinfacht.

Eine vorteilhafte Weiterbildung dieser Ausführung ist im Anspruch 4 angegeben. Es wird erreicht, daß der Stand der Zählschaltung auch bei Ausfall einer äußeren Energieversorgung erhalten bleibt bzw. während des Ausfalls der äußeren Energieversorgung zurückgelegte Umdrehungen der Geberscheibe drehrichtungsabhängig gezählt wird. Hier wird mit einer einzigen Geberscheibe das Auslangen gefunden. Die Energiequelle kann der Zählschaltung zugeordnet oder auch in einer zentralen Steuereinheit leicht auswechselbar angebracht sein.

Eine andere vorteilhafte Weiterbildung ist im Anspruch 5 angegeben.

Die Verwendung eines Wiegand-Empfängers hat den besonderen Vorteil, daß dieser nicht nur ohne jede fremde Energieversorgung auskommt, sondern im wesentlichen in einer sehr genau definierten Relativlage des Erregermagneten zum Empfänger einen Impuls abgibt, der noch dazu in Abhängigkeit von der Bewegungsrichtung des Erregermagneten unterschiedlich gepolt ist, also leicht in Auf- bzw. Abzählsignale für die Zähleinrichtung umgewandelt werden kann.

Um für den Sonderfall, daß die Geberscheibe mit dem Erregermagneten in unmittelbarer Nähe des Wiegand-Empfängers angehalten und dann vielleicht sogar in der entgegengesetzten Richtung weiterbewegt wird, eindeutig definierte Signale zu erhalten und eine Hysterese der Schaltpunkte auszugleichen bzw. zu vermeiden, wird eine Ausbildung nach Anspruch 6 gewählt. Als Nullposition wird der Mittelwert zwischen den beiden ausgelösten Impulsen definiert.

Weitere Einzelheiten und Vorteile der Erfindung entnimmt man der nachfolgenden Zeichnungsbeschreibung.

In der Zeichnung ist die Erfindung beispielsweise veranschaulicht. Es zeigen
- Fig. 1: einen erfindungsgemäßen Drehgeber in stark schematisierter Darstellungsweise in Ansicht,
- Fig. 2: die erste Geberscheibe des Drehgebers nach Fig. 1,
- Fig. 3: die zweite Geberscheibe nach Fig. 1,
- Fig. 4: in der Fig. 1 entsprechender Darstellungsweise einen weiteren Drehgeber und
- Fig. 5: die Geberscheibe dieses Drehgebers in Ansicht.

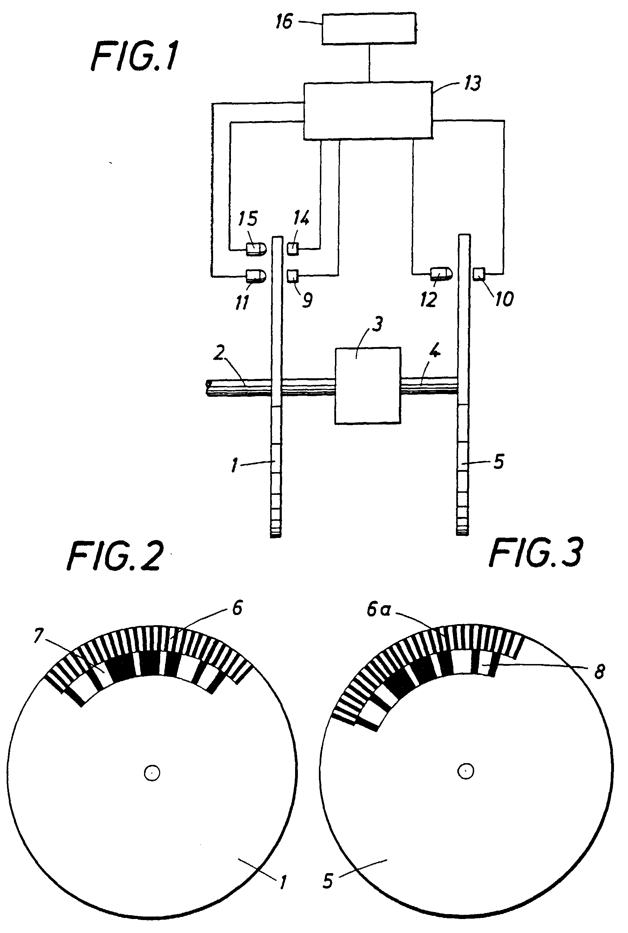

Der Drehgeber nach den Fig. 1 - 3 besitzt eine erste Geberscheibe 1, die von einer Antriebswelle 2 antreibbar ist. Die Welle 2 treibt auch ein sehr hoch, z.B. im Verhältnis 4096 : 1 untersetzendes Zwischengetriebe 3 an, auf dessen Ausgangswelle 4 eine zweite Geberscheibe 5 angeordnet ist.

Die Geberscheibe 1 besitzt eine auf einem Kreisring angeordnete, inkrementale Meßteilung 6 aus gleich großen Strichen und Lücken, die, ebenso wie eine in einer zweiten Spur angeordnete, ebenfalls über einen Kreisring reichende serielle Strichcodierung 7 in vielfach vergrößerten Einzelelementen dargestellt wurde. Die Grundteilung der Strichcodierung 7 entspricht der Inkrementalteilung, so daß die Flanken der Striche der Inkrementalteilung an den entsprechenden Stellen mit den Flanken der Felder der seriellen Strichcodierung 7 zusammenfallen.

Eine weitere, auf einem Kreisring vorgesehene Meßteilung in Form einer seriellen Strichcodierung 8 ist auf der Scheibe 5 vorhanden.

Zur Abtastung der seriellen Strichcodierungen 7, 8 dienen Zeilendetektoren 9, 10 mit entsprechend der Grundteilung der Codierung 7, 8 vorgesehenen Zeilen, wobei diese Zeilendetektoren 9, 10 über Beleuchtungseinrichtungen 11, 12 durch die Teilungen 7, 8 hindurch beleuchtet werden und daher der momentanen Relativstellung zur Scheibe 1 bzw. 5 entsprechende Codewörter aus den Teilungen 7, 8 erfassen. Die Signale der Zeilendetektoren 9 und 10 werden einer gemeinsamen Auswertungseinheit 13 zugeführt. Es ist dabei vorgesehen, daß diese Auswertungseinheit 13 die Beleuchtungseinrichtungen 11, 12 jeweils nur bei Betriebsbeginn, nach einem Ausfall der Versorgungsspannung oder nach einer externen Anforderung blitzlichtartig einschaltet und die dadurch über die Zeilendetektoren erzeugten Signale als Ausgangsposition speichert. Von dieser Ausgangsposition weg erfolgt die weitere Messung unter Abtastung der Inkrementalteilung 6 über eine zugeordnete Abtasteinrichtung 14, der wenigstens eine Beleuchtungseinrichtung 15 zugeordnet ist. Die Abtasteinrichtung 14 kann ebenfalls ein Zeilendetektor sein. Es ist aber auch möglich, wie dies ans ich bekannt ist, für die Abtastung der Inkrementalteilung 6 gegeneinander um Teilungsbruchteile versetzte Abtastgitter und zugeordnete Fotoempfänger zu verwenden, wobei in diesem Fall an den Fotoempfängern gegeneinander drehrichtungsabhängig phasenverschobene Signale auftreten. Durch Erfassung der Phasenlage dieser Signale in der Ausgangsposition ist diese Ausgangsposition um ein vielfaches genauer als aus der Abtastung der Absolutteilung 7 definierbar. Die während der weiteren Messung durch Abtastung der Inkrementalteilung 6 erzeugten Meßsignale können über Vervielfacherschaltungen oder Recheneinheiten zur weiteren elektronischen Unterteilung des Maßstabes geleitet und der Auswertungseinheit 13 zugeführt werden. Auf einer der Auswertungseinheit 13 nachgeordneten Anzeigeeinrichtung 16 kann das Meßergebnis angezeigt werden. Die Auswertungseinheit kann die Signale aber auch zu einer Steuereinrichtung weiterleiten. Wie in Fig. 3 angedeutet wurde, kann auch die zweite Geberscheibe 5 zusätzlich mit einer Inkrementalteilung 6a versehen werden, der nicht dargestellte, sinngemäß den Einrichtungen 14 und 15 entsprechende Abtast- und Beleuchtungseinrichtungen zugeordnet sind, die in diesem Fall aber nicht unbedingt mit Dauerlicht arbeiten müssen.

Durch Abtastung der Inkrementalteilung 6a gemeinsam mit der seriellen Strichcodierung 8 läßt sich in der für die Geberscheibe 1 beschriebenen Weise die Ablesegenauigkeit der seriellen Strichcodierung 8 verbessern.

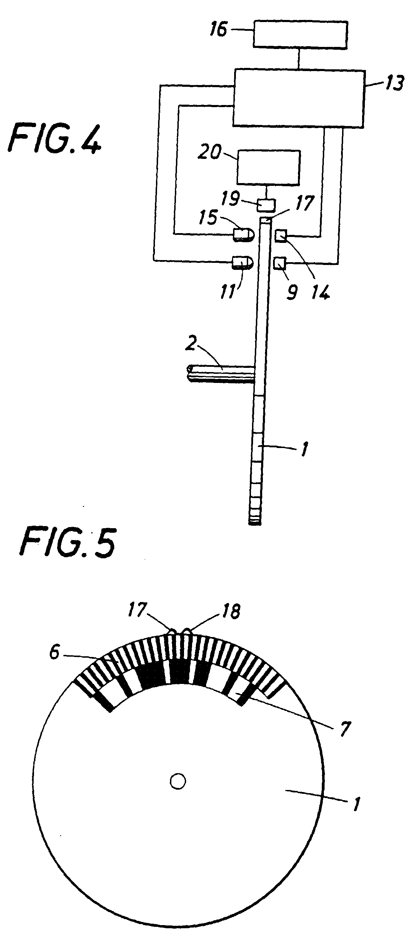

Die Ausführungsform nach den Fig. 4 und 5 entspricht hinsichtlich der Anordnung der ersten Geberscheibe 1 und der Ausbildung von deren Meßteilungen 6, 7 sowie der Auswertung der Meßsignale der Anordnung nach den Fig. 1 - 3, weshalb gleiche Bezugszeichen für diese Teile verwendet wurden.

Zum Unterschied von den Fig. 1 - 3 wird keine zweite Geberverwendet, sondern die Geberscheibe 1 ist an einer Stelle ihres Umfanges mit zwei versetzt angeordneten Erregermagneten 17, 18 ausgestattet. Bei jeder Umdrehung gelangen diese Magnete 17, 18 nacheinander in den Bereich eines nach dem Wiegand-Effekt arbeitenden Empfängers 19 der beim Durchgang jedes Magneten 17 bzw. 18 drehrichtungsabhängig gepolte Signale erzeugt, die einer mit einer eigenen Energieversorgung, z.B. einer Knopfbatterie oder einem Akkumulator, versehenen Zähleinrichtung 20 zugeführt werden, die mit der Auswertungseinheit 13 verbunden ist, wobei der momentane Zählerstand der Zähleinrichtung 20 jeweils der Anzahl der Drehungen der Geberscheibe gegenüber einer angenommenen oder definierten Nullposition entspricht. Die Zähleinrichtung 20 könnte auch in die Auswertungseinrichtung 13 integriert sein. Die Eigenenergieversorgung kann in der Zähleinrichtung oder in der Auswertungseinrlchtung 13 untergebracht werden.

## Patentansprüche

1. Drehgeber mit Inkremental- und Absolutteil für die Erfassung von Winkelpositionen einer Geberscheibe (1), auf der zusätzlich zu einer Inkrementalteilung (6) in einer radial versetzten Spur eine absolut codierte Meßteilung (7) vorhandern ist, die vielstellige, den Absolutpositionen zugeordnete Codewörter bestimmt, wobei eine zugeordnete, optoelektronische Ableseeinrichtung (9, 11) als Zeilendetektor (9) mit wenigstens je ein vollständiges Codewort erfassender Zeilenanzahl ausgeführt und für die Inkrementalteilung (6) eine weitere, optoelektronische Ableseeinrichtung (14, 15) vorhandern ist, wobei eine Auswerteeinheit (13) die Momentanposition der Geberscheibe (1) aus den Abtastsignalen beider Teilungen (6, 7) bestimmt, dadurch gekennzeichnet, daß die absolut codierte Meßteilung in Form einer seriellen Strichcodierung (7) vorhandern, ihre Ableseeinrichtung (9) als CCD-Chip oder Dioden-Zeilenarray ausgebildet ist und eine der Strichcodierung angepaßte Pixelgröße aufweist, daß die Flanken der Codierungsbits der seriellen Strichcodierung (7) mit den Flanken der Inkremente der Inkrementalteilung (6) fluchten und daß eine Beleuchtungseinrichtung (11) für die serielle Strichcodierung (7) nur bei Betriebsbeginn, nach Betriebsunterbrechungen oder bei externer Anforderung blitzlichtartig kurzzeitig einschaltbar ist, so daß die Auswertungseinheit (13) die absolute Momentanposition erfaßt und speichert und die weitere Messung bzw. Positionierung unter Auswertung und Zählung der durch die Abtastung der Inkrementalteilung (6) der Geberscheibe (1) erhaltenen Signale auf diese Momentanposition bezieht und daß zur Erfassung der Anzahl der zurückgelegten Umdrehungen der Geberscheibe (1) eine von einer fremden Energieversorgung unabhängige Zähleinrichtung (5, 10; 17 - 20) vorhandern ist.

2. Drehgeber nach Anspruch 1, dadurch gekennzeichnet, daß die Zähleinrichtung eine Geberscheibe (5) mit absolut codierter Meßteilung (8) und zugeordneter Ableseeinrichtung (10) aufweist und diese zweite Geberscheibe (5) mit der Antriebseinrichtung (2) der ersten Geberscheibe (1) über ein Untersetzungsgetriebe (3) verbunden ist, und daß die Meßteilung (8) der zweiten Geberscheibe (5) ebenfalls eine serielle Strichcodierung aufweist und die Ableseeinrichtung (10) entsprechend ausgebildet ist.

3. Drehgeber nach Anspruch 1, dadurch gekennzeichnet, daß die Geberscheibe (1) wenigstens ein Betätigungselement (17, 18) für die drehrichtungsabhängige Betätigung einer Vor-Rückwärts-Zähleinrichtung (20) trägt.

4. Drehgeber nach Anspruch 3, dadurch gekennzeichnet, daß das Betätigungselement als auf der Geberscheibe (1) mit Abstand von deren Drehachse (2) angebrachtes Erregerelement (17, 18) eines ohne fremde Energieversorgung, insbesondere auf kapazitivem oder magnetischem Weg, bei der Vorbeibewegung des Erregerelementes an einem Empfänger (19) elektrische Impulse erzeugenden Bausatzes ausgebildet ist, wobei der Ausgang des Empfängers mit einer von einer netzunabhängigen Energiequelle, z.B. einer Knopfbatterie, versorgten Zählschaltung (20) verbunden ist.

5. Drehgeber nach Anspruch 4, dadurch gekennzeichnet, daß das Erregerelement als Erregermagnet oder -magnetgruppe (17, 18) für einen nach dem Wiegand-Effekt arbeitenden Empfänger (19) ausgebildet ist.

6. Drehgeber nach Anspruch 5, dadurch gekennzeichnet, daß auf der Geberscheibe (1) zwei Erregermagnete (17, 18) versetzt angeordnet sind.

## Claims

1. A selsyn with an incremental part and an absolute part for detecting angular positions of a disc (1) which in addition to an incremental scale (6) on a radially offset track bears an absolute coded measurement scale (7) which determines multi-digit code words associated with the absolute positions, a line detector (9) in the form of an associated opto-electronic reader (9, 11) comprising a number of lines each detecting a complete code word, and an additional opto-electronic reader (14, 15) is provided for the incremental scale (6), an evaluating unit (13) determining the instantaneous position of the selsyn disc (1) from the scanning signals of the two scales (6, 7), characterised in that the absolute coded measurement scale is in the form of a serial bar code (7), its reader (9) is a CCD chip or diode line array and has a pixel size adapted to the bar code, the flanks of the coding bits of the serial bar code (7) are in line with the flanks of the increments of the incremental scale (6), and an illuminating device (11) for the serial bar code (7) can be switched on briefly after the style of a flash only at the beginning of operation, after interruptions to operation or when externally required, so that the evaluating unit (13) detects and stores the absolute instantaneous position, and relates to said instantaneous position the subsequent measurement or positioning with evaluation and counting of the signals obtained by scanning the incremental scale (6) on the selsyn disc (1), and a counter (5, 10; 17 - 21) independent of an external energy supply is provided for detecting the number of revolutions made by the selsyn disc (1).

2. A selsyn according to claim 1, characterised in that the counter comprises a selsyn disc (5) with an absolute coded measurement scale (8) and an associated reader (10), this second disc (5) is connected to the drive device (2) of the first disc (1) via a step-down gear (3), and the measurement scale (8) on the second disc (5) likewise has a serial bar code and the reader (10) is constructed correspondingly.

3. A selsyn according to claim 1, characterised in that the disc (1) bears at least one actuating element (17, 18) for actuating a forward and backward counter (20) in dependence on the direction of rotation.

4. A selsyn according to claim 3, characterised in that the actuating element is an energiser element (17, 18) disposed on the disc (1) at a distance from the shaft (2) on which it rotates and belonging to a subassembly which does not have an external energy supply and which generates electric pulses, more particularly by capacitive or magnetic means, when the energiser element moves past a receiver (19), the output of the receiver being connected to a counting circuit (20) supplied by a source independent of the mains, e.g. a button cell.

5. A selsyn according to claim 4, characterised in that the energiser element is an energiser magnet or group of magnets (17, 18) for a receiver (19) operating by the Wiegand effect.

6. A selsyn according to claim 5, characterised in that two energiser magnets (17, 18) are disposed offset on the selsyn disc (1).

## Revendications

1. Capteur de rotation comportant une partie incrémentielle et une partie absolue pour capter des positions angulaires d'un disque de capteur (1) sur lequel une échelle de mesure à codage absolu (7) est présente, en plus d'une échelle incrémentielle (6), sur une piste décalée dans le sens radial pour déterminer des mots codés à plusieurs positions qui sont associés aux positions absolues, cependant qu'un dispositif de lecture optoélectronique associé (9, 11) est réalisé sous la forme d'un détecteur de lignes (9) avec un nombre de lignes détectant à chaque fois au moins un mot codé complet, qu'il existe pour l'échelle incrémentielle (6) un autre dispositif de lecture optoélectronique (14, 15), et qu'une unité d'exploitation (13) détermine la position instantanée du disque de capteur (1) à partir des signaux d'exploration des deux échelles (6, 7), caractérisé par le fait que l'échelle de mesure à codage absolu est présente sous la forme d'un code à barres sériel (7), et que son dispositif de lecture (9) est réalisé sous la forme d'une puce à couplage de charge ou d'une barrette de diodes en présentant une dimension des pixels adaptée au code à barres, par le fait que les flancs des bits de codage du code à barres sériel (7) sont alignés sur les flancs des incréments de l'échelle incrémentielle (6), par le fait qu'un dispositif d'éclairage (11) destiné au code à barres sériel (7) ne peut être mis en marche pendant un court instant à la manière d'une lampe flash que lors du début du fonctionnement, après des interruptions du fonctionnement ou dans le cas d'exigences extérieures, de sorte que l'unité d'exploitation (13) détecte et enregistre la position instantanée absolue, et que l'autre mesure ou l'autre positionnement, respectivement, se réfère à cette position instantanée en exploitant et en comptant les signaux qui sont obtenus par exploration de l'échelle incrémentielle (6) du disque de capteur (1), et par le fait qu'un dispositif de comptage (5, 10 ; 17 à 20) indépendant d'une alimentation en énergie étrangère est présent pour déterminer le nombre des révolutions du disque de capteur (1) qui sont effectuées.

2. Capteur de rotation selon la revendication 1, caractérisé par le fait que le dispositif de comptage comporte un disque de capteur (5) pourvu d'une échelle de mesure à codage absolu (8), ainsi qu'un dispositif de lecture associé (10), et que ce deuxième disque de capteur (5) est relié au dispositif d'entraînement (2) du premier disque de capteur (1) par l'intermédiaire d'un réducteur (3), et par le fait que l'échelle de mesure (8) du deuxième disque de capteur (5) présente également un code à barres sériel, le dispositif de lecture (10) étant réalisé en conséquence.

3. Capteur de rotation selon la revendication 1, caractérisé par le fait que le disque de capteur (1) porte au moins un élément d'actionnement (17, 18) qui est destiné à actionner un dispositif de comptage en plus et en moins (20) d'une manière dépendante du sens de rotation.

4. Capteur de rotation selon la revendication 3, caractérisé par le fait que l'élément d'actionnement est réalisé sous la forme d'un élément d'excitation (17, 18) qui est monté sur le disque de capteur (1) à distance de l'axe (2) de celui-ci et qui appartient à un composant engendrant des impulsions électriques dans un récepteur (19) sans alimentation en énergie extérieure, et en particulier par voie capacitive ou magnétique, lors du passage de l'élément d'excitation, cependant que la sortie du récepteur est reliée à un circuit de comptage (20) alimenté par une source d'énergie indépendante du réseau qui est par exemple une pile bouton.

5. Capteur de rotation selon la revendication 4, caractérisé par le fait que l'élément d'excitation est réalisé sous la forme d'un aimant ou d'un groupe d'aimants d'excitation (17, 18) destiné à un récepteur (19) qui fonctionne par effet Wiegand.

6. Capteur de rotation selon la revendication 5, caractérisé par le fait que deux aimants d'excitation (17, 18) sont disposés d'une manière décalée sur le disque de capteur (1).
